# EUROPEAN PATENT APPLICATION

(11) **EP 3 677 371 A1**
(43) Date of publication of application: **08.07.2020**
(21) Application number: 19204576.3
(22) Date of filing: 22.10.2019
(51) Int. Cl.: B23K 11/11, B23K 11/20, B23K 11/31

(54) **RESISTANCE WELDING MACHINE, AND RESISTANCE WELDING METHOD AND WELDING MACHINE USING THE RESISTANCE WELDING MACHINE**

(30) Priority: 06.11.2018 JP 2018209082
(71) Applicant: Mazda Motor Corporation, Hiroshima 730-8670 (JP)
(72) Inventor: YAMAGUCHI, Kojiro, Hiroshima, 730-8670 (JP); TAKAHASHI, Katsunori, Hiroshima, 730-8670 (JP); MORIWAKI, Motonori, Hiroshima, 730-8670 (JP); NAKAI, Masanori, Hiroshima, 730-8670 (JP); ICHIHARA, Koichiro, Hiroshima, 730-8670 (JP); TOMINAGA, Yasuhiro, Hiroshima, 730-8670 (JP); UJIHIRA, Naoki, Hiroshima, 730-8670 (JP)
(74) Representative: Thoma, Michael

(57) **Abstract**

A resistance welding machine includes a first electrode and a second electrode which are configured so that the first and second electrodes can hold a workpiece therebetween and apply a current to the workpiece. The first electrode includes a first inner electrode and a first outer electrode disposed outside the first inner electrode at a predetermined interval. The second electrode includes a second inner electrode and a second outer electrode disposed outside the second inner electrode at a predetermined interval. The resistance welding machine further includes a control unit that can control the pressing state of the workpiece with the first and second electrodes according to predetermined welding conditions and selects a pair of electrodes that apply a current to the workpiece from the first inner electrode, the first outer electrode, the second inner electrode, and the second outer electrode.

## Description

### BACKGROUND

The present disclosure relates to resistance welding machines and resistance welding methods and welding machines using the resistance welding machine.

Resistance welding is conventionally widely used to weld overlapping metal sheets. In resistance welding, an object to be welded (hereinafter referred to as the workpiece) is held between opposing electrodes and a predetermined current is applied between the electrodes to heat and melt a predetermined portion of the workpiece. What is called indirect resistance welding is also widely used. In indirect resistance welding, a pair of electrodes are disposed at a predetermined interval on the same side of two partially overlapping metal sheets, and a current is applied between the two metal sheets.

In the indirect resistance welding, since two electrodes are disposed on the same side, the interval between the electrodes needs to be a predetermined value or more. It is therefore difficult to weld a small region. Moreover, such a large electrode interval causes an increase in current path. A shunt current tends to flow in the workpiece, which causes reduction in welding efficiency.

Japanese Unexamined Patent Publication No. 2011-031269 describes a resistance welding machine that performs indirect resistance welding by using an electrode having an inner electrode and an outer electrode disposed outside the inner electrode at a predetermined interval. In such a resistance welding machine, a shunt current in a workpiece can be reduced and welding efficiency can be improved.

In the resistance welding machine described in Japanese Unexamined Patent Publication No. 2011-031269, the interval between the electrodes is small and therefore a deep current path cannot be formed in a workpiece. Accordingly, when welding, e.g., overlapping thick plates, this resistance welding machine may not provide sufficient heat input to the interface between the thick plates, namely the portions to be joined. Moreover, in, e.g., conventional resistance welding machines having a pair of opposing electrodes or the resistance welding machine described in Japanese Unexamined Patent Publication No. 2011-031269, the current path is fixed and therefore a heat generating portion cannot be variably controlled in the thickness direction of a workpiece. It is therefore difficult to preferentially heat and melt a predetermined portion, and welding quality may be reduced.

### SUMMARY

The present disclosure was made in view of the above circumstances, and it is an object of the present disclosure to provide a resistance welding machine capable of variably controlling a heat generating portion of a workpiece, and a resistance welding method and a welding machine which use the resistance welding machine.

In order to achieve the above object, a resistance welding machine according to the present disclosure includes a first electrode and a second electrode which are disposed such that their tip ends face each other at a predetermined interval and which are configured so that the first and second electrodes can hold therebetween an object to be welded and apply a current to the object. The first electrode includes a first inner electrode and a first outer electrode disposed outside the first inner electrode at a predetermined interval. The second electrode includes a second inner electrode and a second outer electrode disposed outside the second inner electrode at a predetermined interval. The resistance welding machine further includes a control unit that can control a pressing state of the object with the first electrode and the second electrode according to predetermined welding conditions and selects a pair of electrodes that apply a current to the object from the first inner electrode, the first outer electrode, the second inner electrode, and the second outer electrode according to the predetermined welding conditions.

With this configuration, a pair of electrode are selected from the electrodes of the first and second electrodes to apply a current to the object to be welded, and the pressing state of the object with the first and second electrodes and the combination of the electrodes that apply a current to the object are controlled according to the predetermined welding conditions. Accordingly, heat generating portions in welding objects with various structures can be variably controlled.

A resistance welding method according to the present disclosure is a resistance welding method using the above resistance welding machine. The resistance welding method includes: an object placing step of placing between the first electrode and the second electrode an object to be welded; an electrode selecting step of selecting a pair of electrodes that applies a current to the object from the first inner electrode, the first outer electrode, the second inner electrode, and the second outer electrode according to predetermined welding conditions; a pressing condition setting step of setting pressing conditions for pressing the object by at least one of the first inner electrode and the first outer electrode and at least one of the second inner electrode and the second outer electrode; a current application condition setting step of setting current application conditions for applying a current between the pair of electrodes; and a current application step of pressing the object according to the pressing conditions set in the pressing condition setting step and applying a current to the object according to the current application conditions set in the current application condition setting unit.

According to this method, the object to be welded is pressed by the first and second electrodes according to the predetermined welding conditions, and a pair of electrodes are selected from the electrodes of the first and second electrodes to apply a current to the object. Accordingly, welding objects with various structures can be resistance welded with appropriate heat input to a predetermined portion.

A welding machine according to the present disclosure includes: the above resistance welding machine; a support body that supports the resistance welding machine; and an equalizing mechanism disposed between the resistance welding machine and the support body.

With this configuration, the welding machine absorbs a relative position error between the object and the resistance welding machine so that an excessive pressure is not applied to the object and deformation of the object is restrained. Moreover, heat generating portions in welding objects with various structures can be variably controlled, and welding objects with various structures can be resistance welded with appropriate heat input to a predetermined portion.

As described above, the resistance welding machine and the welding machine of the present disclosure can variably control heat generating portions of welding objects with various structures. According to the resistance welding method of the present disclosure, welding objects with various structures can be resistance welded with appropriate heat input to a predetermined portion.

### BRIEF DESCRIPTION OF THE DRAWINGS

FIG. 1 is a schematic diagram illustrating a functional configuration of a resistance welding machine according to a first embodiment.
FIG. 2 is a flowchart illustrating a process of resistance welding a workpiece.
FIGS. 3A to 3E are schematic diagrams illustrating how a current path in a workpiece is changed according to the first embodiment.
FIGS. 4A to 4C are schematic diagrams illustrating how a current path in a workpiece is changed according to a first modification.
FIGS. 5A to 5C are schematic diagrams illustrating how a current path in a workpiece is changed according to a second modification.
FIG. 6 is a schematic diagram illustrating a welded workpiece according to a third modification.
FIGS. 7A and 7B are schematic diagrams illustrating the configuration of a first electrode according to a second embodiment.
FIG. 8 is a schematic view illustrating the positional relationship between a workpiece and first and second electrodes.
FIG. 9 is a schematic diagram illustrating the configuration of a welding machine according to a third embodiment.

### DETAILED DESCRIPTION

Embodiments of the present disclosure will be described in detail with reference to the accompanying drawings. The following description of preferred embodiments is merely illustrative in nature and is not intended to limit the present disclosure, its application or uses.

### First Embodiment

### Configuration of Resistance Welding Machine

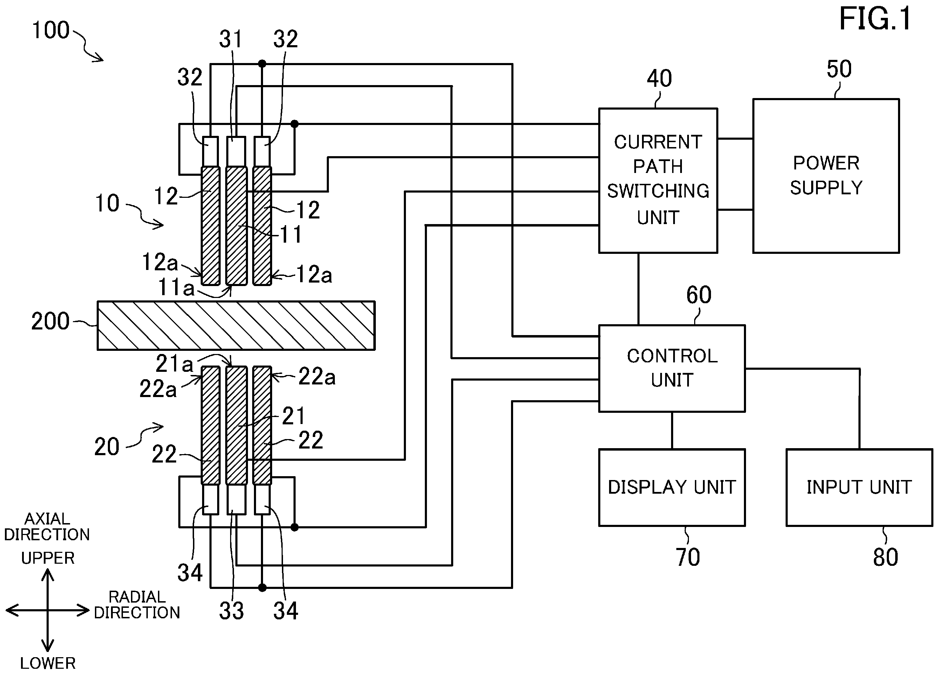

FIG. 1 is a schematic diagram illustrating a functional configuration of a resistance welding machine according to the present embodiment. For convenience of explanation, mechanical structures other than main parts of first and second electrodes 10, 20 are not shown in FIG. 1. A first inner electrode 11, a first outer electrode 12, a second inner electrode 21, and a second outer electrode 22 are shown simplified in FIG. 1, and their shapes shown in FIG. 1 are different from actual shapes. Although a resistance welding machine 100 includes many components in addition to those shown in FIG. 1, such as, e.g., a welding gun body that is a support for the first and second electrodes 10, 20 and air tubes for driving first to fourth pressing units 31 to 34, these components are not shown in the figure and detailed description thereof is omitted. In the following description, the longitudinal direction of the first electrode 10 is sometimes referred to as the "axial direction," the direction of the radius of the first electrode 10 is sometimes referred to as the "radial direction," and the direction of the circumference of the first electrode 10 is sometimes referred to as the "circumferential direction." In the axial direction, the tip end side of the first electrode 10, namely the side of the first electrode 10 which contacts a workpiece 200, is sometimes referred to as "lower" and "lower side," and the opposite side of the first electrode 10 from the tip end side is sometimes referred to as "upper" or "upper side."

As shown in FIG. 1, the resistance welding machine 100 includes the first and second electrodes 10, 20, the first to fourth pressing units 31 to 34, a welding power supply (hereinafter simply referred to as the power supply) 50, a control unit 60, a display unit 70, and an input unit 80. The resistance welding machine 100 further includes a current path switching unit 40 connected to the power supply 50.

The first electrode 10 is an electrode comprised of a substantially cylindrical first inner electrode 11 and a hollow, substantially cylindrical first outer electrode 12. The end face of a tip end 11a of the first inner electrode 11 is a downward convex surface, and its curvature etc. are determined as appropriate according to the conditions under which the resistance welding machine 100 is used, the material and life of the tip end 11a, etc. The tip end 11a is detachable and is replaced at predetermined intervals according to the welding conditions.

The first outer electrode 12 is disposed outside the first inner electrode 11 at a predetermined interval. Like the tip end 11a of the first inner electrode 11, a tip end 12a of the first outer electrode 12 is also detachable.

The second electrode 20 is an electrode comprised of a substantially cylindrical second inner electrode 21 and a hollow, substantially cylindrical second outer electrode 22. The second outer electrode 22 is disposed outside the second inner electrode 21 at a predetermined interval. The shapes, materials, and functions of the individual parts of the second electrode 20 are similar to those of the corresponding parts of the first electrode 10. Tip ends 21a, 22a are detachable as in the first electrode 10.

Although not shown in the figure, a water cooling pipe is disposed inside the first inner electrode 11, the first outer electrode 12, the second inner electrode 21, and the second outer electrode 22. These water cooling pipes are connected to a cooling water circulation mechanism, not shown, so that cooling water of a predetermined temperature flows in the first inner electrode 11, the first outer electrode 12, the second inner electrode 21, and the second outer electrode 22. This configuration restrains an increase in temperature of each electrode during current application, especially an increase in temperature of the tip ends 11a, 12a, 21a, 22a and eliminates or reduces the risk of welding of the electrodes to the workpiece 200. This configuration also restrains reduction in life of the tip ends 11a, 12a, 21a, 22a. Each electrode is water-cooled until a predetermined time passes during current application or after completion of current application.

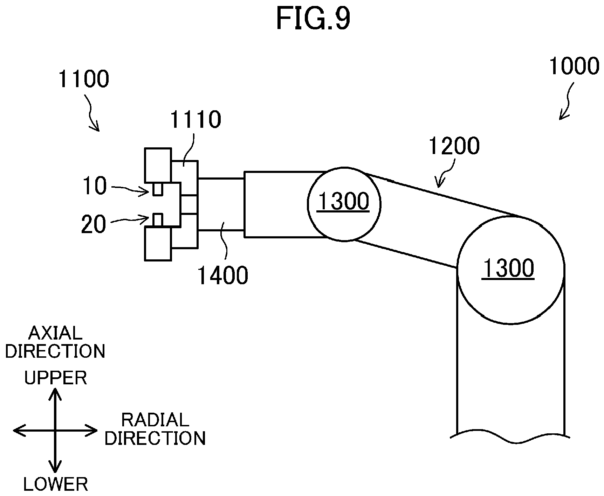

The first electrode 10 and the second electrode 20 are disposed such that their tip ends face each other at a predetermined interval. The first electrode 10 and the second electrode 20 are supported by the welding gun body (see FIG. 9) so that the first electrode 10 and the second electrode 20 are movable along a part of the welding gun body which extends in the axial direction. The first electrode 10, the second electrode 20, and the welding gun body form a main part of a welding gun (see FIG. 9).

The first to fourth pressing units 31 to 34 are pressing mechanisms that move the first inner electrode 11, the first outer electrode 12, the second inner electrode 21, and the second outer electrode 22 in the axial direction to bring the electrodes into contact with the workpiece 200 and press the electrodes against the workpiece 200. In the present embodiment, the first to fourth pressing units 31 to 34 are formed by an air cylinder, a compression pump, not shown, etc. However, the present disclosure is not limited to this. For example, a hydraulic cylinder, a servomotor, etc. may be used as the first to fourth pressing units 31 to 34.

The first pressing unit 31 is configured to press the first inner electrode 11 in the axial direction, and the second pressing unit 32 is configured to press the first outer electrode 12 in the axial direction. The third pressing unit 33 is configured to press the second inner electrode 21 in the axial direction, and the fourth pressing unit 34 is configured to press the second outer electrode 22 in the axial direction. The first to fourth pressing units 31 to 34 are electrically connected to the control unit 60. The pressing forces of the first to fourth pressing units 31 to 34 may be the same or different from each other. As described later, when the first and second electrodes 10, 20 are to be brought into contact with the workpiece 200, the first to fourth pressing units 31 to 34 are controlled so that the opposing electrodes, for example, the first inner electrode 11 and the second inner electrode 21, press the workpiece 200 with the same pressing force, namely so that the first pressing unit 31 and the third pressing unit 33 have the same pressing force, in order to stably hold the workpiece 200. For example, in the case where servomotors are used as the first to fourth pressing units 31 to 34, the pressing forces of the first to fourth pressing units 31 to 34 can be variable.

The control unit 60 can either control the first to fourth pressing units 31 to 34 independently of each other or control the first to fourth pressing units 31 to 34 so that the first to fourth pressing units 31 to 34 are driven cooperatively with each other. The control unit 60 can also control the first to fourth pressing units 31 to 34 so that desired two or more of the first to fourth pressing units 31 to 34 are driven cooperatively with each other.

The current path switching unit 40 is connected to the first inner electrode 11, the first outer electrode 12, the second inner electrode 21, and the second outer electrode 22 and is connected to the power supply 50 and the control unit 60. The current path switching unit 40 has a plurality of electrical contacts and switches (not shown) therein. The current path switching unit 40 turns on or off a corresponding switch(es) in response to a control signal sent from the control unit 60 according to predetermined welding conditions, thereby switching the combination of electrodes connected to the power supply 50. For example, the current path switching unit 40 switches the combination of electrodes connected to the power supply 50 from the first inner electrode 11 and the first outer electrode 12 to the first inner electrode 11 and the second inner electrode 21.

With this configuration, the current path switching unit 40 changes the current path in the workpiece 200 as described later. The set of electrodes to be selected by the control unit 60 and the current path switching unit 40 may be the first electrode 10 and the second electrode 20. In this case, the first inner electrode 11 and the first outer electrode 12 are electrically connected in common to function as a single electrode. Similarly, the second inner electrode 21 and the second outer electrode 22 are electrically connected in common to function as a single electrode.

For example, a plurality of power supplies 50 may be provided instead of the current path switching unit 40, and the current path in the workpiece 200 may be switched by selecting a desired set of electrodes from the first inner electrode 11, the first outer electrode 12, the second inner electrode 21, and the second outer electrode 22 by switching connection between each electrode and the plurality of power supplies 50. In this case, the number of electrodes to be selected may be limited depending on the number of power supplies 50.

The power supply 50 is configured to apply a predetermined amount of current between the first and second electrodes 10, 20, specifically between the set of electrodes selected by the control unit 60 and the current path switching unit 40, for a predetermined time in response to a control signal sent from the control unit 60 according to predetermined welding conditions. That is, the power supply 50 is electrically connected to the first inner electrode 11, the first outer electrode 12, the second inner electrode 21, and the second outer electrode 22. The current path switching unit 40 may be incorporated in the power supply 50 and integrated with the power supply 50. The resistance welding machine 100 thus has a compact configuration.

The control unit 60 is configured to send control signals to the first to fourth pressing units 31 to 34, the current path switching unit 40, and the power supply 50 according to predetermined welding conditions. The control unit 60 is also electrically connected to the display unit 70 and the input unit 80. The control unit 60 is typically comprised of a central processing unit (CPU), an interface between the central processing unit and an external device, etc.

The control unit 60 may store a welding program that is set in advance according to the structure, material, etc. of the workpiece 200. The welding program may be stored in a storage unit, not shown, provided separately from the control unit 60. In this case, the control unit 60 reads the welding program from the storage unit and sends control signals to each part of the resistance welding machine 100 so that the resistance welding machine 100 performs predetermined welding. In this welding program, welding conditions such as the welding current, the current application time, the pressing time, the pressing force, the set of electrodes to be selected during the welding period, and the timing to change the set of electrodes are set according to the structure, material, etc. of the workpiece 200. The welding conditions include the pressing force and the pressing time for pressing the workpiece 200 by any of the first to fourth pressing units 31 to 34 after completion of current application. The storage unit may be incorporated in the control unit 60. The welding conditions may be set using a teaching device, not shown, instead of the control unit 60.

The display unit 70 is connected to the control unit 60 and is configured to display, e.g., the contents of the welding program to be executed, various kinds of information during welding such as a change in applied current value with time, etc. The display unit 70 may display data other than the above information. The display unit 70 typically includes a display device such as a cathode ray tube or a liquid crystal display.

The input unit 80 is connected to the control unit 60 and is configured to input the detailed information on modifications of the welding program etc. directly to the control unit 60. The input unit 80 is also configured to receive a command to invoke the welding program to be executed directly from the control unit 60 etc. The input unit 80 is comprised of a keyboard, a touch panel, etc. When a touch panel is used, the display unit 70 and the input unit 80 may be implemented as a single unit.

### Process of Resistance Welding Object

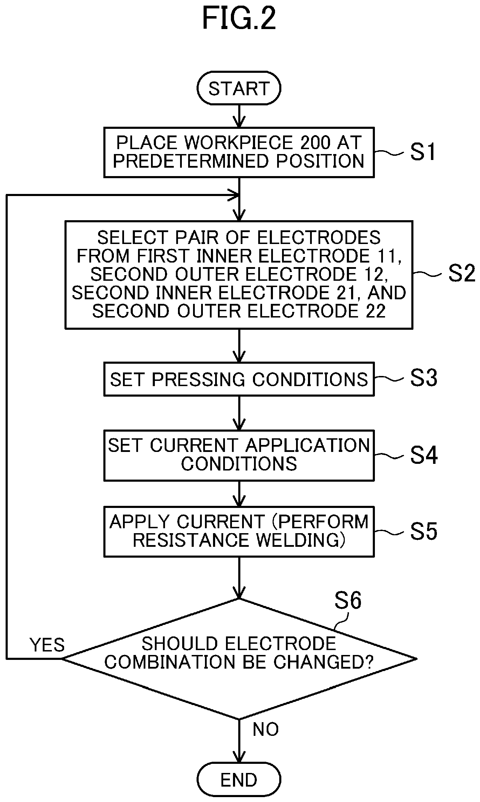

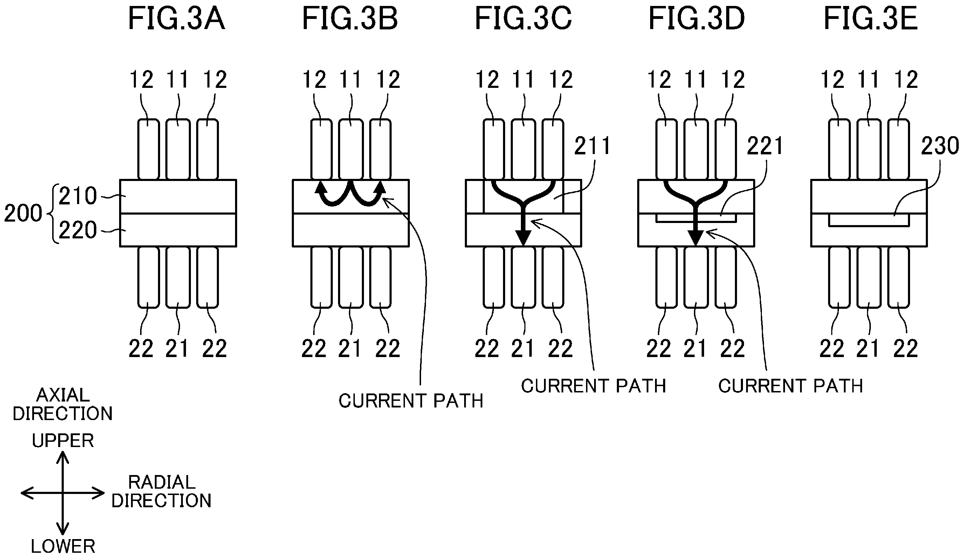

FIG. 2 is a flowchart illustrating a process of resistance welding a workpiece, and FIGS. 3A to 3E illustrate how a current path in the workpiece is changed.

First, the workpiece 200 is placed between the first electrode 10 and the second electrode 20 (step S1: object placing step).

Next, a pair of electrodes between which a current is to be applied are selected from the first inner electrode 11, the first outer electrode 12, the second inner electrode 21, and the second outer electrode 22 according to predetermined welding conditions (step S2: electrode selecting step). As described above, the first electrode 10 and the second electrode 20 may be selected. Pressing conditions for pressing the workpiece 200 by the first and second electrodes 10, 20 are set (step S3: pressing condition setting step), and current application conditions including the amount of current to be applied between the pair of electrodes selected in step S2 and the current application time are set (step S4: current application condition setting step). Steps S2 to S4 need not necessarily be performed in this order, and the order of steps S2 to S4 may be reversed. Alternatively, steps S2 to S4 may be performed at the same time. In the case where the workpiece 200 is resistance welded according to a predetermined welding program, steps S2 to S4 correspond to a part of the process in the welding program selected at the time the structure, material, etc. of the workpiece 200 are selected. In step S3, not only the pressing time and the pressing force for pressing the workpiece 200 by the first and second electrodes 10, 20 are set but also whether the first to fourth pressing units 31 to 34 are to be controlled independently of or cooperatively with each other.

The workpiece 200 is then pressed by the first and second electrodes 10, 20 under the pressing condition set in step S3, and a current is applied between the pair of electrodes selected in step S2 under the current application conditions set in step S4 to apply a current to the workpiece 200 (step S5: current application step). The pressing forces of the first to fourth pressing units 31 to 34 may be changed during step S5, and the amount of current may be changed during step S5. A period during which current application is stopped may be set in step S5. In step S5, the current application conditions and the pressing conditions may be changed together or may be changed independently of each other.

After step S5 is completed, whether the combination of the pair of electrodes for applying a current to the workpiece 200 should be changed or not is determined according to the predetermined welding conditions (step S6: electrode changing step). Step S6 is performed by the control unit 60. Step S6 may be included in the predetermined welding program.

If it is determined in step S6 that the combination of the pair of electrodes for applying a current to the workpiece 200 should be changed (YES in step S6), the routine returns to step S2, where a pair of electrodes for applying a current to the workpiece 200 is selected again. The pressing conditions and the current application conditions are then set again (steps S3, S4) and a current is applied to the workpiece 200 again (step S5).

If it is determined in step S6 that the combination of the pair of electrodes for applying a current to the workpiece 200 need not be changed (NO in step S6), resistance welding of the workpiece 200 is terminated.

FIGS. 3A to 3E schematically illustrate how the current path in the workpiece 200 is changed during resistance welding performed according to the above process. The workpiece 200 is a stack of a steel sheet 210 having a first thickness and an aluminum sheet 220 having a second thickness. In the present embodiment, the steel sheet 210 and the aluminum sheet 220 have the same thickness. However, the steel sheet 210 and the aluminum sheet 220 may have different thicknesses from each other. The workpiece 200 is not limited to this structure and may have other structures. For example, the workpiece 200 may be a stack of three or more sheets. For convenience of explanation, the components etc. of the resistance welding machine 100 other than the first and second electrodes 10, 20 are not shown in FIGS. 3A to 3E.

As shown in FIG. 3A, when resistance welding the workpiece 200, the workpiece 200 is placed between the first and second electrodes 10, 20 and is pressed and held therebetween. At this time, the control unit 60 controls the first to fourth pressing units 31 to 34 cooperatively with each other. The workpiece 200 is pressed by the first and second electrodes 10, 20 with the first electrode 10 being in contact with the steel sheet 210 and the second electrode 20 being in contact with the aluminum sheet 220. The contact state between the workpiece 200 and the first and second electrodes 10, 20 is determined according to the pressing forces of the first to fourth pressing units 31 to 34 set at this time. The contact state between the steel sheet 210 and the aluminum sheet 220 is also determined. For example, in the case where the first and second electrodes 10, 20 press the workpiece 200 with a high pressing force, the contact resistance between the workpiece 200 and the first and second electrodes 10, 20 and the contact resistance between the steel sheet 210 and the aluminum sheet 220 are reduced. In the case where the first and second electrodes 10, 20 press the workpiece 200 with a low pressing force, these contact resistances are increased. The initial current path in the workpiece 200 can be determined based on this. For example, when the first to fourth pressing units 31 to 34 are controlled to press the workpiece 200 so that the contact resistance is reduced in a desired portion, a current flows in the portion with the reduced contact resistance.

Next, as shown in FIG. 3B, a predetermined amount of current is applied between the first inner electrode 11 and the first outer electrode 12 to apply a current to the steel sheet 210. When a current is applied to the steel sheet 210 for a predetermined time, the steel sheet 210 generates heat and the temperature of the steel sheet 210 increases, as shown in FIG. 3C. Iron, which is a main component of the steel sheet 210, has lower thermal conductivity than aluminum etc., and heat tends to stay in a part of the steel sheet 210 which is located near the current path (hereinafter this part is referred to as the heat generating portion 211). The temperature at the interface of the aluminum sheet 220 with the heat generating portion 211 also increases accordingly. Aluminum has a lower melting point than iron. Accordingly, when the temperature of the heat generating portion 211 reaches a predetermined value or higher, aluminum is melted at the interface to form a melted portion 221 as shown in FIG. 3D. After a predetermined time from the state of FIG. 3B, the set of electrodes for applying a current to the workpiece 200 is switched as shown in FIG. 3C, so that a current is applied to the workpiece 200 by the switched set of electrodes. Specifically, a current is applied between the first outer electrode 12 and the second inner electrode 21. As a current is applied to the workpiece 200 in this manner, the current density near the melted portion 221 becomes lower than in the state of FIG. 3B, so that the temperature at the interface between the steel sheet 210 and the aluminum sheet 220 decreases gradually. The melted portion 221 thus solidifies to a joint portion 230, and the steel sheet 210 and the aluminum sheet 220 are joined together. The amount of current to be applied to the workpiece 200 may be reduced when switching the current path as shown in FIG. 3C. In order to restrain formation of blowholes described later, the workpiece 200 is pressed by the first and second electrodes 10, 20 for a predetermined time from before the start of current application to the workpiece 200 to after completion of current application to the workpiece 200 (FIG. 3E). In the state shown in FIGS. 3C to 3E, the pressing force with which the first inner electrode 11 and the second inner electrode 21 press the workpiece 200 may be reduced while pressing the workpiece 200 by the first and second electrodes 10, 20. This reduces heat dissipation from the workpiece 200 through the first inner electrode 11 and the second inner electrode 21 and eliminates or reduces the possibility of rapid cooling of that the heat generating portion 211 and the melted portion 221. However, this pressing force needs to be maintained at such a value that does not cause blowholes.

When welding the workpiece 200 including the aluminum sheet 220, blowholes may be formed in the workpiece 200 if the temperature is rapidly reduced after melting of aluminum. In the present embodiment, as shown in FIG. 3C, the current path in the workpiece 200 is switched to gradually reduce the temperature at the interface between the steel sheet 210 and the aluminum sheet 220. This restrains rapid solidification of aluminum and thus restrains formation of blowholes and formation of defects due to the blowholes. Moreover, as shown in FIG. 3E, the workpiece 200 is further pressed after completion of current application. This restrains formation and growth of defects in the workpiece 200. Since the first and second electrodes 10, 20 are in contact with the workpiece 200 for a predetermined time after completion of current application, the welded portion is rapidly cooled and the welding period is reduced.

In the present embodiment, the first and second electrodes 10, 20 are in contact with the workpiece 200 throughout the welding period in order to restrain formation of blowholes. However, for example, in the case where the workpiece 200 has a layered structure of two steel sheets 210, the workpiece 200 may be pressed by the first outer electrode 12 and the second outer electrode 22 while separating the first inner electrode 11 and the second inner electrode 21 from the workpiece 200 after completion of current application or after current application is stopped to switch the pair of electrodes for applying a current to the workpiece 200, in order to adjust the cooling rate of the welded portion. Alternatively, the workpiece 200 may be pressed by the first inner electrode 11 and the second inner electrode 21 while separating the first outer electrode 12 and the second outer electrode 22 from the workpiece 200.

### Effects etc.

As described above, the resistance welding machine 100 according to the present embodiment includes the first electrode 10 and the second electrode 20 which are disposed so that their tip ends face each other at a predetermined interval and are configured so that the first and second electrodes 10, 20 can hold the workpiece 200 therebetween and apply a current to the workpiece 200. The first electrode 10 includes the first inner electrode 11 and the first outer electrode 12 disposed outside the first inner electrode 11 at a predetermined interval. The second electrode 20 includes the second inner electrode 21 and the second outer electrode 22 disposed outside the second inner electrode 21 at a predetermined interval.

The resistance welding machine 100 includes the control unit 60. The control unit 60 can control the pressing state of the workpiece 200 with the first and second electrodes 10, 20 according to predetermined welding conditions. The control unit 60 is configured to select a pair of electrodes for applying a current to the workpiece 200 from the first inner electrode 11, the first outer electrode 12, the second inner electrode 21, and the second outer electrode 22.

For workpieces 200 having various structures, the resistance welding machine 100 of the present embodiment can control the pressing state of the workpiece 200 with the first and second electrodes 10, 20 according to predetermined welding conditions and can change the current path in the workpiece 200 by selecting the electrodes for applying a current to the workpiece 200. The resistance welding machine 100 of the present embodiment thus can variably control the heat generating portion during resistance welding.

Since a current is applied to the workpiece 200, the workpiece 200 on the current path is resistance heated to generate heat. At the same time, since at least one of the first inner electrode 11 and the first outer electrode 12 and at least one of the second inner electrode 21 and the second outer electrode 22 press the workpiece 200, heat is dissipated from the workpiece 200 to the outside through the electrodes that are in contact with the workpiece 200. Accordingly, the resistance welding machine 100 controls heat dissipation from the workpiece 200 by appropriately controlling the amount of current that is applied to the workpiece 200, the current application time, and the pressing state of the workpiece 200 such as the combination of electrodes for pressing the workpiece 200, the pressing force of each electrode pressing the workpiece 200, and the balance between the pressing forces of the electrodes. The resistance welding machine 100 balances heat generation of the workpiece 200 resulting from current application with heat dissipation from the workpiece 200 through the first and second electrodes 10, 20 to heat and melt a desired portion of the workpiece 200. The resistance welding machine 100 thus performs high quality resistance welding with stable joint strength.

The control unit 60 is configured to set the current application conditions for applying a current between a pair of electrodes according to predetermined welding conditions and to set the pressing conditions for pressing the workpiece 200 by the first inner electrode 11, the first outer electrode 12, the second inner electrode 21, and the second outer electrode 22.

The control unit 60 with this configuration can control the total heat input to, and the total heat dissipation from, a desired portion of the workpiece 200. Since the current application conditions and the pressing conditions can be set independently of each other, heating and cooling of the welded portion can be performed independently as shown in, e.g., FIGS. 3B and 3E.

The resistance welding machine 100 further includes the first pressing unit 31 that presses the first inner electrode 11 in the axial direction, the second pressing unit 32 that presses the first outer electrode 12 in the axial direction, the third pressing unit 33 that presses the second inner electrode 21 in the axial direction, and the fourth pressing unit 34 that presses the second outer electrode 22 in the axial direction. The control unit 60 can select whether to control the first to fourth pressing units 31 to 34 independently of each other or cooperatively with each other, according to predetermined welding conditions.

With this configuration, the resistance welding machine 100 can adjust the initial current path during resistance welding and control the heat dissipation portion in the welded portion of the workpiece 200 and the heat dissipation according to predetermined welding conditions.

According to the present embodiment, an increased number of control factors is used to resistance weld the workpiece 200. Namely, the pressing force of the first and second electrodes 10, 12 that press the workpiece 200, the pressing time, the balance of the pressing force between the inner and outer electrodes, the combination of electrodes to be in contact with the workpiece 200 to apply a current thereto, the current application time, the amount of current that is applied to the workpiece 200, etc. are controlled to resistance weld the workpiece 200. Welding is thus finely controlled and high quality resistance welding is implemented.

The resistance welding method according to the present embodiment includes the object placing step of placing the workpiece 200, which is an object to be welded, between the first and second electrodes 10, 20, and the electrode selecting step of selecting a pair of electrodes for applying a current to the workpiece 200 from the first inner electrode 11, the first outer electrode 12, the second inner electrode 21, and the second outer electrode 22 according to predetermined welding conditions.

The resistance welding method further includes the pressing condition setting step of setting the pressing conditions for pressing the workpiece 200 by the first and second electrodes 10, 20 and the current application condition setting step of setting the current application conditions for applying a current between the pair of electrodes. The resistance welding method further includes the current application step of applying a current to the workpiece 200 under the current application conditions set in the current application condition setting step while pressing the workpiece 200 for the pressing time set in the pressing condition setting step.

According to the resistance welding method of the present embodiment, a pair of electrodes are selected from the electrodes 11, 12, 21, 22 of the first and second electrodes 10, 20 according to the predetermined welding conditions, and a current is applied to the workpiece 200 under predetermined pressing conditions and predetermined current application conditions. Workpieces 200 having various structures can be resistance welded with appropriate heat input to a predetermined portion.

The resistance welding method of the present embodiment further includes, after the current application step, the electrode changing step of determining whether the combination of the pair of electrodes that are in contact with the workpiece 200 should be changed or not according to the predetermined welding conditions. If it is determined in the electrode changing step that the combination of the pair of electrodes should be changed, the combination of the pair of electrodes is changed, and the pressing condition setting step, the current application setting step, and the current application step are performed again for the changed pair of electrodes.

Since the current path in the workpiece 200 can thus be changed, the heat generating portion can be variably controlled during resistance welding. A desired portion of the workpiece 200 can thus be heated and melted, and high quality resistance welding with stable joint strength can be implemented. For example, a current that is not large enough to melt the workpiece 200 is applied to the workpiece 200 after the current path is switched, whereby the temperatures of the heat generating portion 211 and the melted portion 221 in the workpiece 200 are gradually reduced and the joint portion 230 is stably formed.

### First Modification

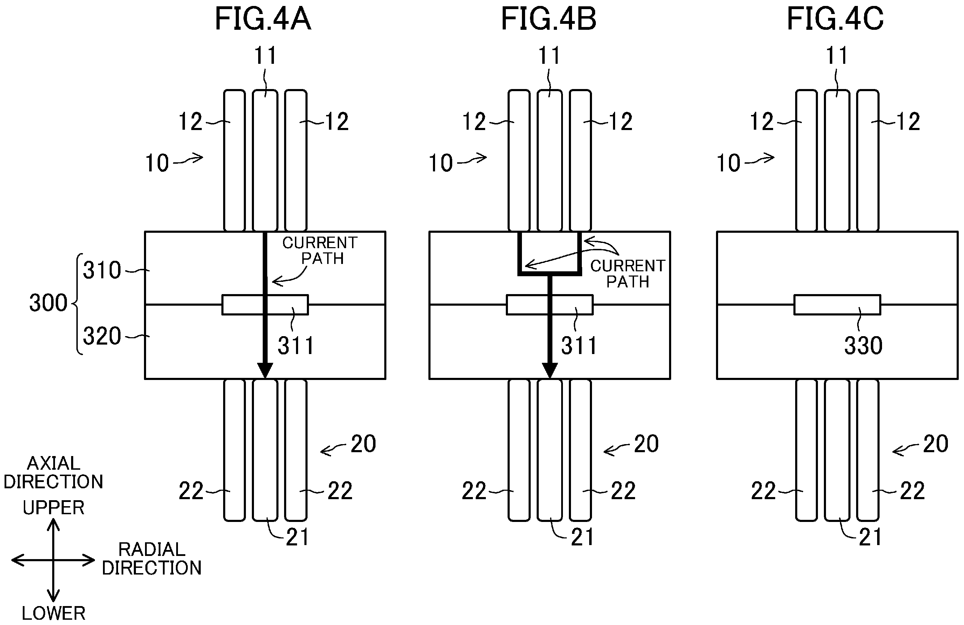

FIGS. 4A to 4C schematically illustrate how the current path in a workpiece is changed according to a first modification. In FIGS. 4A to 4C, portions similar to those of the first embodiment are denoted with the same reference characters as those of the first embodiment, and detailed description thereof will be omitted. In the first modification, a workpiece 300 is a stack of two steel sheets 310, 320.

When resistance welding the workpiece 300, the workpiece 300 is placed between the first and second electrodes 10, 20, and the first to fourth pressing units 31 to 34 are controlled so that the first and second electrodes 10, 20 press and hold the workpiece 300 therebetween with a current path being formed between the first inner electrode 11 and the second inner electrode 21. As shown in FIG. 4A, a current is applied between the first inner electrode 11 and the second inner electrode 21 to form a heat generating portion 311 at the interface between the steel sheets 310, 320.

Next, as shown in FIG. 4B, the set of electrodes for applying a current to the workpiece 300 is switched to apply a current to the workpiece 300. Specifically, a current is applied between the first outer electrode 12 and the second inner electrode 21. As a current is applied to the workpiece 300 in this manner, the current density near the heat generating portion 311 becomes lower than in the state of FIG. 4A, so that the temperature at the interface between the steel sheets 310, 320 decreases gradually. The heat generating portion 311 is thus cooled to form a joint portion 330, and the steel sheets 310, 320 are joined together. The workpiece 300 is pressed by the first and second electrodes 10, 20 for a predetermined time even after completion of current application to the workpiece 300 (FIG. 3C).

The first modification has effects similar to those of the first embodiment. That is, a desired portion of the workpiece 300 can be made to generate heat. Since the current path in the workpiece 300 is changed to apply a predetermined amount of current to the workpiece 300, the temperature of the heat generating portion 311 is gradually reduced to control the softened region. Namely, what is called annealing is performed. The workpiece 300 is pressed by the first and second electrodes 10, 20 after completion of current application, whereby the temperature of the joint portion 330 can be quickly reduced. The joint portion 330 with stable strength is thus formed, and welding quality is improved.

### Second Modification

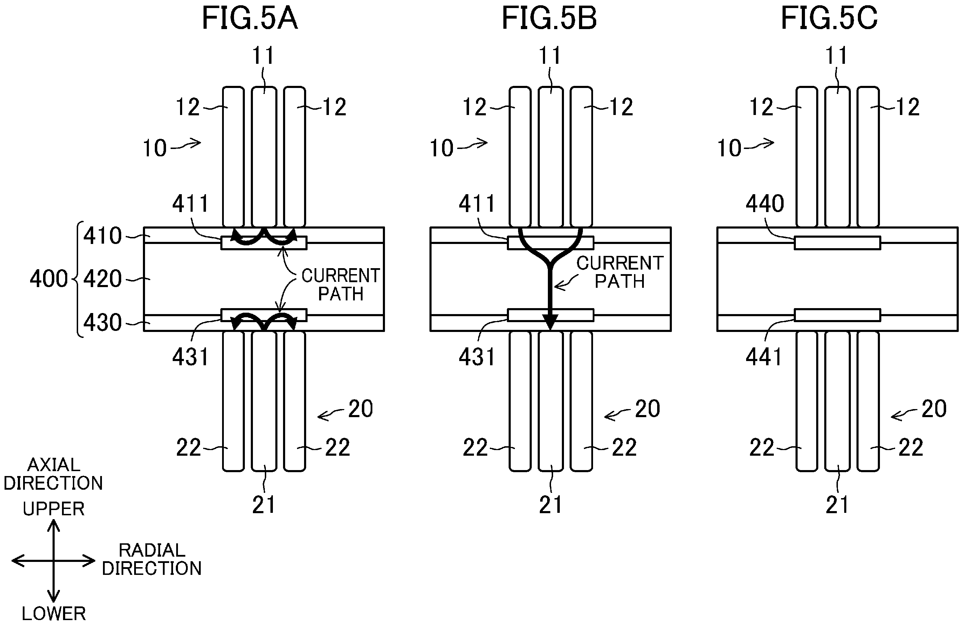

FIGS. 5A to 5C schematically illustrate how the current path in a workpiece is changed according to a second modification. In FIGS. 5A to 5C, portions similar to those of the first embodiment are denoted with the same reference characters as those of the first embodiment, and detailed description thereof will be omitted. In the second modification, a workpiece 400 is a stack of three steel sheets 410, 420, 430. The steel sheets 410, 430 have about the same thickness and are thinner than the steel sheet 420.

When resistance welding the workpiece 400, the workpiece 400 is placed between the first and second electrodes 10, 20, and the first to fourth pressing units 31 to 34 are controlled so that the first and second electrodes 10, 20 press and hold the workpiece 300 therebetween with a current path being formed between the first inner electrode 11 and the first outer electrode 12 and a current path being formed between the second inner electrode 21 and the second outer electrode 22. As shown in FIG. 5A, a current is applied between the first inner electrode 11 and the first outer electrode 12 to form a heat generating portion 411 at the interface between the steel sheets 410, 420. Similarly, a current is applied between the second inner electrode 21 and the second outer electrode 22 to form a heat generating portion 431 at the interface between the steel sheets 420, 430.

Next, as shown in FIG. 5B, the set of electrodes for applying a current to the workpiece 400 is switched to apply a current to the workpiece 400. Specifically, a current is applied between the first outer electrode 12 and the second inner electrode 21. The amount of current in this current path is smaller than that in each current path in FIG. 5A. As a current is applied to the workpiece 400 in this manner, the current density near the heat generating portions 411, 431 becomes lower than in the state of FIG. 5A, so that the temperature at the interface between the steel sheets 410, 420 and the temperature at the interface between the steel sheets 420, 430 decrease gradually. The heat generating portion 411 is thus cooled to form a joint portion 440, and the steel sheets 410, 420 are joined together. Similarly, the heat generating portion 431 is cooled to form a joint portion 441, and the steel sheets 420, 430 are joined together.

The second modification has effects similar to those of the first embodiment and the first modification. That is, a desired portion of the workpiece 400 is made to generate heat, and the temperatures of the heat generating portions 411, 431 are gradually reduced to perform annealing. The joint portions 440, 441 with stable strength can thus be formed. As shown in FIG. 5C, the workpiece 400 is pressed by the first and second electrodes 10, 20 after completion of current application, whereby the temperatures of the joint portions 440, 441 can be quickly reduced. The joint portions 440, 441 are thus more stably formed, and welding quality is improved.

### Third Modification

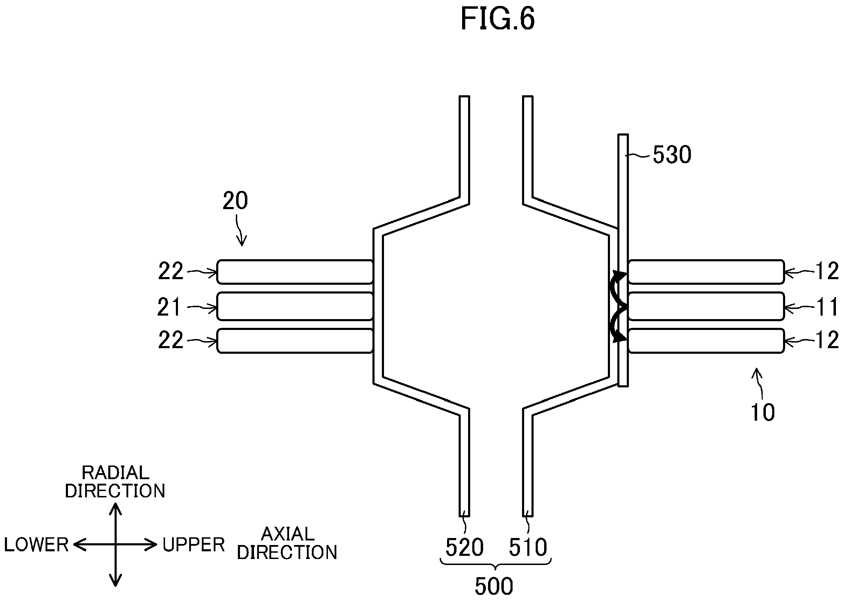

FIG. 6 schematically illustrates how the current path in a workpiece is changed according to a third modification. In FIG. 6, portions similar to those of the first embodiment are denoted with the same reference characters as those of the first embodiment, and detailed description thereof will be omitted. Although a metal member 510 is shown separated from a metal member 520 in FIG. 6, flange portions of the two metal members 510, 520 may abut on each other.

As shown in FIG. 6, a hollow workpiece 500 is comprised of the two metal members 510, 520 having their flange portions placed on top of each other. In the case where another metal member 530 is welded to the outer surface of the metal member 510 of the workpiece 500, a current is applied between, e.g., the first inner electrode 11 and the first outer electrode 12 to join the metal members 510, 530. In the case where the metal member 530 is welded to the outer surface of the metal member 510 with the flange portions of the two metal members 510, 520 being placed on top of each other, the second electrode 20 may be placed in contact with the metal member 520 and pressed toward the first electrode 10 so that the workpiece 500 does not move. Although not shown in the figure, in the case where still another metal member is welded to the outer surface of the metal member 520, a current is applied between, e.g., the second inner electrode 21 and the second outer electrode 22 to join the metal member 520 and the metal member.

As described above, according to the third modification, high quality resistance welding can be implemented even when resistance welding is performed with the electrodes being in contact with only one side of the workpiece 500.

### Second Embodiment

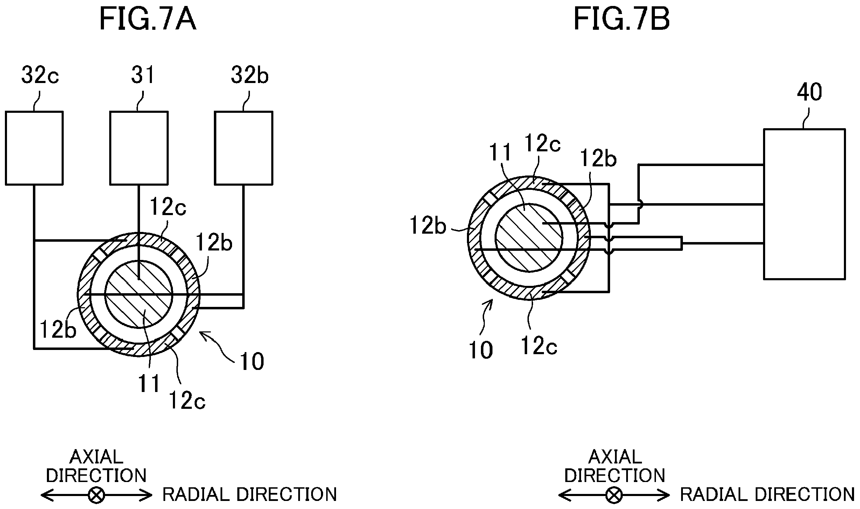

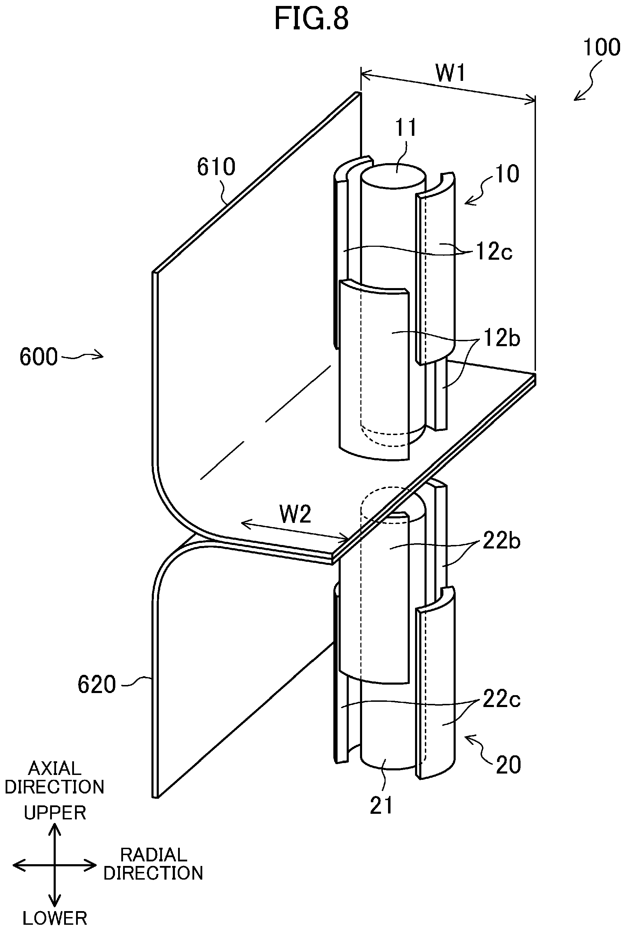

FIGS. 7A and 7B schematically illustrate a first electrode according to a second embodiment, and FIG. 8 schematically illustrates the positional relationship between the first and second electrodes and a workpiece. FIGS. 7A and 7B are schematic views of the first electrode 10 as viewed from below in the axial direction. In the second embodiment, portions similar to those of the first embodiment are denoted with the same reference characters as those of the first embodiment, and detailed description thereof will be omitted. Wiring between the first electrode 10 and the current path switching unit 40 and connection between the first electrode 10 and the first to fourth pressing units 31 to 34 are schematically illustrated in FIGS. 7A and 7B and are different from the manner in which they are actually connected etc.

The first electrode 10 of the second embodiment shown in FIGS. 7A and 7B is different from the first electrode 10 of the first embodiment shown in FIG. 1 in that the first outer electrode 12 is divided into four electrodes that are arranged at predetermined intervals in the circumferential direction.

Of the plurality of divided electrodes of the first outer electrode 12, a set of diagonally opposite divided electrodes 12b (hereinafter simply referred to as the divided electrodes 12b) are capable of pressing a workpiece in the axial direction independently of another set of diagonally opposite divided electrodes 12c (hereinafter simply referred to as the divided electrodes 12c). Specifically, as shown in FIG. 7A, a second pressing unit 32b is connected to the divided electrodes 12b, and a second pressing unit 32c is connected to the divided electrodes 12c. The control unit 60 controls the second pressing unit 32b to press the divided electrodes 12b in the axial direction. At this time, the second pressing unit 32b is controlled either independently of, or cooperatively with, the first pressing unit 31, the third pressing unit 33, the fourth pressing unit 34, and the second pressing unit 32c. The set of divided electrodes 12b are driven cooperatively with each other by the second pressing unit 32b. Similarly, the control unit 60 controls the second pressing unit 32c to press the divided electrodes 12c in the axial direction. At this time, the second pressing unit 32c is controlled either independently of, or cooperatively with, the other pressing units 31, 33, 34, 32b. The set of divided electrodes 12c are driven cooperatively with each other by the second pressing unit 32c.

Although not shown in the figure, the second outer electrode 22 is also comprised of divided electrodes 22b, 22c (see FIG. 8). The divided electrodes 22b, 22c are controlled by two fourth pressing units 34, not shown, to press a workpiece 600 (see FIG. 8) in the axial direction. At this time, the divided electrodes 22b, 22c are driven independently of, or cooperatively with, the other electrodes 11, 12b, 12c, 21.

As shown in FIG. 7B, the divided electrodes 12b and the divided electrodes 12c are connected to different terminals of the current path switching unit 40. Although not shown in the figures, the divided electrodes 22b and the divided electrodes 22c are also connected to different terminals of the current path switching unit 40. For example, in the case where one of a set of electrodes between which a current is applied is the divided electrodes 12b, the other of the set of electrodes can be selected from the first inner electrode 11, the divided electrodes 12c, the second inner electrode 21, and the divided electrodes 22b, 22c according to a control signal from the control unit 60. Similarly, in the case where one of a set of electrodes between which a current is applied is the divided electrodes 12c, 22c, or 22c, the other of the set of electrodes can be selected from the other electrodes according to a control signal from the control unit 60.

The resistance welding machine 100 having the first and second outer electrodes 12, 22 configured as described above can weld a narrower workpiece as compared to the resistance welding machine 100 having the configuration of the first embodiment. This will be specifically described with reference to FIG. 8. For better understanding of the positional relationship between the divided electrodes 12b, 12c of the first outer electrode 12 and the divided electrodes 22b, 22c of the second outer electrode 22, the first to fourth pressing units 31 to 34 and the wiring for each part are not shown in FIG. 8.

The workpiece 600 shown in FIG. 8 is a member comprised of two metal members 610, 620 with their flange portions overlapping each other. The overlapping parts of the flange portions of the metal members 610, 620 of the workpiece 600 are held between the first and second electrodes 10, 20 and pressed by the first and second electrodes 10, 20, and a current is applied between the first and second electrodes 10, 20. The flange portions are thus welded together.

The flange portion of the workpiece 600 is usually narrow in the radial direction, and depending on the dimensions of the flange portion, it may be difficult to place the first and second electrodes 10, 20 in contact with the flange portion. As shown in FIG. 8, the actual overlapping width W2 of the flange portions of the metal members 610, 620 is usually smaller than the design width W1 of the flange portions of the metal members 610, 620. This is because a corner portion with a predetermined curvature is formed in the flange portion when each metal member 610, 620 is machined to form the flange portion. The width W2 therefore becomes smaller than the width W1 by the amount equal to the radius of the corner portion. The actual shape of the corner portion varies according to the size of the metal members 610, 620, the specifications of a machining facility such as a press machine, the design value of the width W1, etc. This makes it more difficult to place the first and second electrodes 10, 20 in contact with the overlapping parts of the flange portions of the metal members 610, 620, namely the portions to be welded.

According to the present embodiment, each of the first and second outer electrodes 12, 22 is comprised of a plurality of divided electrodes. Each set of diagonally opposite divided electrodes is driven cooperatively with each other, and each set of diagonally opposite divided electrodes can together press the workpiece 600 and apply a current to the workpiece 600. Accordingly, the effective size of the portions of the first and second outer electrodes 12, 22 which are to contact the workpiece 600 is reduced, and the resistance welding machine 100 of the second embodiment reliably welds narrower portions as compared to the resistance welding machine 100 of the first embodiment. FIG. 8 illustrates an example in which the divided electrodes 12b of the first outer electrode 12 and the divided electrodes 22b of the second outer electrode 22 contact the workpiece 600.

The two electrodes between which a current is applied can be switched among the first inner electrode 11, the divided electrodes 12b, 12c of the first outer electrode 12, the second inner electrode 21, and the divided electrodes 22b, 22c of the second outer electrode 22 according to predetermined welding conditions. Accordingly, even when, e.g., another metal member is placed on the flange portion of the workpiece 600, the workpiece 600 is resistance welded with high quality as in the first embodiment and its modifications. Moreover, even when the welding portions of the workpiece which are to be welded together have a more complicated shape, the divided electrodes to be used can be changed according to, e.g., the welding position, and welding is more finely controlled.

The current path, namely the divided electrodes between which a current is applied, is switched according to the shape of the workpiece 600 etc. This restrains wear of the divided electrodes 12b, 12c and the divided electrodes 22b, 22c during welding and reduction in life of the divided electrodes 12b, 12c and the divided electrodes 22b, 22c.

The number of divided electrodes of the first and second outer electrodes 12, 22 is set in advance according to the shape of the workpiece to be welded by the resistance welding machine 100.

With this configuration, even a workpiece with a small welding region is resistance welded with high quality as in the first embodiment.

As in the first embodiment, for example, a plurality of power supplies 50 may be provided instead of the current path switching unit 40, and the current path in the workpiece 600 may be switched by selecting a desired set of electrodes from the first inner electrode 11, the divided electrodes 12b, 12c, the second inner electrode 21, and the divided electrodes 22b, 22c by switching connection between each electrode and the plurality of power supplies 50.

In the present embodiment, each of the first outer electrode 12 and the second outer electrode 22 is divided into four electrodes. However, the present disclosure is not limited to this, and each of the first outer electrode 12 and the second outer electrode 22 may be divided into n electrodes (n is an even number). Alternatively, only one of the first outer electrode 12 and the second outer electrode 22 may be divided into n electrodes.

### Third Embodiment

FIG. 9 schematically illustrates a welding machine according to a third embodiment. For convenience of explanation, the configurations other than a welding gun 1100 are not shown in detail in FIG. 9, and detailed description thereof will be omitted. The structures of the first and second electrodes 10, 20 are not shown in detail in FIG. 9, and detailed description thereof will be omitted.

A welding machine 1000 includes a welding gun 1100, a robot arm 1200 that is a support body for the welding gun 1100, and an equalizing mechanism 1400.

The welding gun 1100 includes a welding gun body 1110, the first electrode 10, and the second electrode 20. The welding gun 1100 is also provided with the first to fourth pressing units 31 to 34 (not shown) shown in FIG. 1. The first electrode 10 and the second electrode 20 are supported by the welding gun body 1110. The first electrode 10 and the second electrode 20 is movable in the axial direction independently of or cooperatively with each other. The welding gun 1100 corresponds to the main part of the resistance welding machine 100 described in the first and second embodiments.

The robot arm 1200 is divided into a plurality of parts, and a joint shaft 1300 is placed at each connection portion between the parts. Each joint shaft 1300 is rotationally driven by a servomotor (not shown). With the robot arm 1200 configured as described above, the welding gun 1100 attached to the tip end of the robot arm 1200 can be moved to a desired position.

The equalizing mechanism 1400 is a mechanism that absorbs a relative position error between a workpiece, not shown, and the first and second electrodes 10, 20. The equalizing mechanism 1400 is configured to balance the weight of the welding gun body 1110 so that an excessive pressure is not applied to the workpiece. The equalizing mechanism 1400 is operated by an air pressure, a hydraulic cylinder, a servomotor, etc.

According to the present embodiment, since the welding machine 1000 includes the equalizing mechanism 1400, approximately the same force is applied to the first and second electrodes 10, 20. Deformation of the workpiece is thus restrained and the workpiece is stably welded. Even when the robot arm teaching accuracy and the workpiece pressing accuracy are lower than a predetermined level, the equalizing mechanism 1400 absorbs a relative position error between the workpiece and the first and second electrodes 10, 20 so that an excessive pressure is not applied to the workpiece.

The welding gun 1100 is attached to the robot arm 1200 via the equalizing mechanism 1400. Accordingly, a workpiece with a complicated shape can be resistance welded by moving the welding gun 1100 to a desired position. The electrodes of the first and second electrodes 10, 20, namely the first inner electrode 11, the first outer electrode 12, the second inner electrode 21, and the second outer electrode 22, can be controlled independently of or cooperatively with each other to press a workpiece, and the current path between the electrodes can be switched according to predetermined welding conditions. Accordingly, workpieces having various structures can be resistance welded by variably controlling a portion to be heated and providing appropriate heat input to a predetermined portion.

Although not shown in the figure, in the present embodiment, the first outer electrode 12 and the second outer electrode 22 may be divided into an even number of electrodes arranged at a predetermined interval(s) in the axial direction, as in the second embodiment. With this configuration, as in the second embodiment, a workpiece having a small welding region is resistance welded with high quality.

The resistance welding machine of the present disclosure variably controls a portion to be heated and provides appropriate heat input to a predetermined portion. The resistance welding machine of the present disclosure is therefore industrially useful as a resistance welding machine capable of welding workpieces having various structures with high quality.

## Claims

1. A resistance welding machine including a first electrode and a second electrode which are disposed such that their tip ends face each other at a predetermined interval and which are configured so that the first and second electrodes can hold therebetween an object to be welded and apply a current to the object, **characterized in that**
the first electrode includes a first inner electrode and a first outer electrode disposed outside the first inner electrode at a predetermined interval,
the second electrode includes a second inner electrode and a second outer electrode disposed outside the second inner electrode at a predetermined interval, and
the resistance welding machine further comprises a control unit that can control a pressing state of the object with the first electrode and the second electrode according to predetermined welding conditions and selects a pair of electrodes that apply a current to the object from the first inner electrode, the first outer electrode, the second inner electrode, and the second outer electrode according to the predetermined welding conditions.

2. The resistance welding machine of claim 1, **characterized in that**
the control unit is configured to set current application conditions for applying a current between the pair of electrodes according to the predetermined welding conditions and to set pressing conditions for pressing the object by the first inner electrode, the first outer electrode, the second inner electrode, and the second outer electrode.

3. The resistance welding machine of claim 1 or 2, **characterized by** further comprising:
a first pressing unit that presses the first inner electrode in an axial direction;
a second pressing unit that presses the first outer electrode in the axial direction;
a third pressing unit that presses the second inner electrode in the axial direction; and
a fourth pressing unit that presses the second outer electrode in the axial direction, wherein
the control unit is configured so that it can select whether to control the first to fourth pressing units independently of each other or cooperatively with each other, according to the predetermined welding conditions.

4. The resistance welding machine of any one of claims 1 to 3, **characterized in that**
at least one of the first outer electrode and the second outer electrode has n divided electrodes arranged at a predetermined interval in a circumferential direction, where n is an even number, and
the control unit selects a pair of electrodes that apply a current to the object from the first outer electrode or a set of diagonally opposite ones of the divided electrodes of the first outer electrode, the first inner electrode, the second inner electrode, and the second outer electrode or a set of diagonally opposite ones of the divided electrodes of the second outer electrode according to the predetermined welding conditions.

5. A resistance welding method using the resistance welding machine of any one of claims 1 to 4, **characterized by** comprising:
an object placing step of placing between the first electrode and the second electrode an object to be welded;
an electrode selecting step of selecting a pair of electrodes that applies a current to the object from the first inner electrode, the first outer electrode, the second inner electrode, and the second outer electrode according to predetermined welding conditions;
a pressing condition setting step of setting pressing conditions for pressing the object by at least one of the first inner electrode and the first outer electrode and at least one of the second inner electrode and the second outer electrode;
a current application condition setting step of setting current application conditions for applying a current between the pair of electrodes; and
a current application step of pressing the object according to the pressing conditions set in the pressing condition setting step and applying a current to the object according to the current application conditions set in the current application condition setting unit.

6. The resistance welding method of claim 5, **characterized by** further comprising:
after the current application step, an electrode changing step of determining whether the combination of the pair of electrodes that apply a current to the object should be changed or not according to the predetermined welding conditions, wherein
when it is determined in the electrode changing step that the combination of the pair of electrodes should be changed, the combination of the pair of electrodes is changed to perform the pressing condition setting step, the current application condition setting step, and the current application step again.

7. The resistance welding method of claim 5 or 6, **characterized in that**
the object is resistance welded during the current application step.

8. The resistance welding method of any one of claims 5 to 7, **characterized in that**
the object includes at least a stack of a first metal member having a first thickness and a second metal member having a second thickness.

9. The resistance welding method of claim 8, **characterized in that**
the first metal member and the second metal member are made of different materials from each other.

10. A welding machine, **characterized by** comprising:
the resistance welding machine of any one of claims 1 to 4;
a support body that supports the resistance welding machine; and
an equalizing mechanism disposed between the resistance welding machine and the support body.
